# EUROPEAN PATENT APPLICATION

(11) **EP 4 810 532 A1**
(43) Date of publication of application: **23.09.2026**
(21) Application number: 24891747.8
(22) Date of filing: 12.11.2024
(51) Int. Cl.: C08F 220/14, C08F 212/08, C08F 222/40, C08L 33/12, C08L 51/04

(54) **STYRENE-BASED COPOLYMER, METHOD FOR PREPARING SAME, AND RESIN COMPOSITION INCLUDING SAME**

(30) Priority: 13.11.2023 KR 20230156731
(71) Applicant: LG Chem, Ltd., Seoul 07336 (KR)
(72) Inventor: JU, Min Cheol, Daejeon 34122 (KR); LEE, Dae Woo, Daejeon 34122 (KR); BAE, Jae Yeon, Daejeon 34122 (KR); SHIN, Min Seung, Daejeon 34122 (KR); HONG, Sung Won, Daejeon 34122 (KR); KIM, In Soo, Daejeon 34122 (KR); SHIN, Chan Ho, Daejeon 34122 (KR)
(74) Representative: Vossius & Partner Patentanwälte Rechtsanwälte mbB
(86) International application number: PCT/KR2024/017841
(87) International publication number: WO 2025/105801

(57) **Abstract**

The styrene-based copolymer according to an embodiment of the present invention may include alkyl (meth)acrylate-based monomer units, aromatic vinyl monomer units, and maleimide monomer units, and have a refractive index deviation of 0.02 or less as defined by Equation 1 below. $\begin{matrix}refractive index deviation \\ = \frac{first refractive index - second refractive index}{first refractive index} \times 100\end{matrix}$

In Equation 1 above, a first refractive index refers to a refractive index measured after vacuum drying the styrene-based copolymer, and a second refractive index refers to a refractive index of a precipitate obtained by dissolving the styrene-based copolymer in a tetrahydrofuran (THF) solution and then by precipitation with methanol.

## Description

### [Technical Field]

### [Cross-Reference To Related Application]

The present application claims priority to and the benefit of Korean Patent Applications No. 10-2023-0156731 filed in the Korean Intellectual Property Office on November 13, 2023, and all of the disclosures in those Korean patent applications are hereby incorporated by reference as part of this specification.

### [Technical Field]

The present invention relates to a styrene-based copolymer, a method of manufacturing the same, and a resin composition including the same.

### [Background Art]

With the recent development of electric vehicles, there is a growing demand for automotive materials that meet the lighting design needs due to design changes that differ from traditional ones. Automotive materials must meet excellent heat resistance, and a material that satisfies the appropriate heat resistance as an automotive component is polycarbonate (PC) resin. However, PC has had issues with paintability and post-processing defects. Accordingly, a resin composition that satisfies excellent processability and heat resistance, including a conjugated diene-based graft copolymer and a styrene-based copolymer, has emerged as an alternative to polycarbonate resin.

The conjugated diene-based graft copolymer, manufactured by graft polymerizing monomers such as vinyl aromatic monomers and vinyl cyanide monomers onto a conjugated diene-based polymer, is widely used as an impact modifier for resin compositions due to the excellent rubber properties of the conjugated diene-based polymer. The conjugated diene-based graft copolymer possesses a balanced combination of rigidity, chemical resistance, impact resistance, and processability. It also offers excellent secondary processing characteristics, such as impact strength, mechanical properties, surface gloss, plating, printing, and painting, while enabling the production of products in various colors.

However, resin compositions including conjugated diene-based graft copolymers have had the issue of low transparency. To address this issue, it is necessary to develop a styrene-based copolymer with high heat resistance and excellent transparency as a matrix material to be used along with the highly processable conjugated diene-based graft copolymer.

### [Documents of Related Art]

### [Patent Documents]

(Patent Document 0001) KR 10-2158148 B1

### Disclosure

### [Technical Problem]

The problem to be solved by the present invention is to provide a styrene-based copolymer with high heat resistance and excellent transparency as a matrix material to be used together with a conjugated diene-based graft copolymer and the like.

### [Technical Solution]

(1) The present invention provides a styrene-based copolymer including alkyl (meth)acrylate-based monomer units, aromatic vinyl monomer units, and maleimide monomer units, and having a refractive index deviation of 0.02 or less as defined by Equation 1 below.

   $refractive index deviation = \frac{first refractive index - second refractive index}{first refractive index} \times 100$
   In Equation 1 above,
   a first refractive index refers to a refractive index measured after vacuum drying the styrene-based copolymer, and
   a second refractive index refers to a refractive index of a precipitate obtained by dissolving the styrene-based copolymer in a tetrahydrofuran (THF) solution and then by precipitation with methanol.
(2) The present invention provides the styrene-based copolymer of (1), in which the refractive index deviation is 0.01 or less.
(3) The present invention provides the styrene-based copolymer of (1) or (2), in which the alkyl (meth)acrylate-based monomer units are included in an amount of 75 wt% or more, and 80 wt% or less.
(4) The present invention provides the styrene-based copolymer of any one of (1) to (3), in which the aromatic vinyl monomer units are included in an amount of 10 wt% or more, and 20 wt% or less, and the maleimide monomer units are included in an amount of 5 wt% or more, and 15 wt% or less.
(5) The present invention provides the styrene-based copolymer of any one of (1) to (4), in which a haze value measured in accordance with ASTM D1003 is 1.1% or less.
(6) The present invention provides the styrene-based copolymer of any one of (1) to (5), in which a transmittance value measured in accordance with ASTM D1003 is 91% or more.
(7) The present invention provides the styrene-based copolymer of any one of (1) to (6), in which a melt index measured under conditions of 220 °C, 10 kg, is 10 g/10 min or more, in accordance with ASTM D1238.
(8) The present invention provides a method of manufacturing a styrene-based copolymer, comprising: introducing an alkyl (meth)acrylate-based monomer, an alkyl-unsubstituted aromatic vinyl monomer, a maleimide monomer, and an organic dispersant into a reactor to manufacture a mixture (S1); and suspension polymerizing the mixture at a temperature of 85 °C or more and 95 °C or less (S2).
(9) The present invention provides the method of (8), in which an alkyl-substituted aromatic vinyl monomer is not introduced in step S1.
(10) The present invention provides the method of (8) or (9), in which the organic dispersant does not include a metal element.
(11) The present invention provides the method of any one of (8) to (10), in which the organic dispersant is one or more selected from the group consisting of water-soluble polyvinyl alcohol, partially saponified polyvinyl alcohol, polyacrylic acid, polyacrylic acid-acrylate, polyacrylate, a copolymer of vinyl acetate and maleic anhydride, hydroxypropyl methylcellulose, and gelatin.
(12) The present invention provides a resin composition including: a graft copolymer including a conjugated diene-based polymer, aromatic vinyl monomer units, vinyl cyanide monomer units, and alkyl (meth)acrylate-based monomer units; and the styrene-based copolymer according to any one of (1) to (7).

### [Advantageous Effects]

The styrene-based copolymer according to the present invention serves as a matrix material used together with a conjugated diene-based graft copolymer and the like, exhibiting high heat resistance and excellent transparency.

### [Mode for Disclosure]

Hereinafter, the present invention will be described in more detail to aid understanding.

Terms or words used in the description and the claims of the present invention should not be interpreted as being limited to a general or dictionary meaning and should be interpreted as a meaning and a concept which conform to the technical spirit of the present invention based on a principle that an inventor can appropriately define a concept of a term in order to describe his/her own invention by the best method.

In the present invention, terms such as "comprise," "include," or "have" are intended to designate the presence of implemented features, numbers, steps, constituent elements, or combinations thereof, and should not be understood as precluding the possibility of the presence or addition of one or more other features, numbers, steps, constituent elements, or combinations thereof.

In the present invention, the term "monomer unit" may refer to a component, structure, or the substance itself derived from a monomer, and as a specific example, may refer to a repeating unit formed within a polymer as a result of the introduced monomer participating in a polymerization reaction during the polymerization of a polymer.

The term "composition," as used in the present invention, includes not only the reaction products and decomposition products formed from the materials of the corresponding composition but also mixtures of the materials including the corresponding composition.

In the present invention, an average particle diameter of the graft copolymer may be measured using dynamic light scattering, and, as a specific example, may be measured using a Nicomp 380 HPL device (product name, manufactured by Nicomp). In the present specification, the average particle diameter refers to an arithmetic average particle diameter, i.e., a scattering intensity average particle diameter, in the particle size distribution measured by dynamic light scattering.

### <Styrene-based copolymer>

The present invention provides a styrene-based copolymer.

The styrene-based copolymer according to an embodiment of the present invention includes alkyl (meth)acrylate-based monomer units, aromatic vinyl monomer units, and maleimide monomer units, and has a refractive index deviation of 0.02 or less as defined by Equation 1 below.$refractive index deviation = \frac{first refractive index - second refractive index}{first refractive index} \times 100$

In Equation 1 above,
a first refractive index refers to the refractive index measured after vacuum drying the styrene-based copolymer, and
a second refractive index refers to the refractive index of a precipitate obtained by dissolving the styrene-based copolymer in a tetrahydrofuran (THF) solution and then by precipitation with methanol.

The present inventors have found that when a styrene-based copolymer having a refractive index deviation of 0.02 or less, as defined by Equation 1 above, is used as a matrix material for use with a conjugated diene-based graft copolymer and the like, the transparency of the styrene-based copolymer itself and the transparency of the resin composition are improved without any degradation of other properties, leading to the completion of the present invention.

According to an embodiment of the present invention, the first refractive index in Equation 1 above may be a refractive index measured on an obtained sample at 25 °C using an Abbe refractometer in accordance with ASTM D542, after obtaining the sample by vacuum drying 4 g of the styrene-based copolymer at a temperature of 220°C for 2 hours.

In addition, according to an embodiment of the present invention, the second refractive index in Equation 1 above may refer to a refractive index measured on an obtained sample at 25 °C using an Abbe refractometer in accordance with ASTM D542, after obtaining the sample by dissolving 4 g of the styrene-based copolymer in 40 ml of tetrahydrofuran (THF) solution, precipitation in 120 ml of methanol, and vacuum drying the obtained precipitate at a temperature of 220 °C for 2 hours.

According to an embodiment of the present invention, the styrene-based copolymer may include polymeric substances, oligomers, and residual monomers therein. The transparency of the styrene-based copolymer may improve as the content of the polymeric substances and oligomers within the styrene-based copolymer is low or as the composition of the polymeric substances and oligomers becomes more similar. However, the sample obtained by vacuum drying the styrene-based copolymer is a sample with only residual monomers removed from the styrene-based copolymer, while the sample obtained by dissolving the styrene-based copolymer in the THF solution, precipitation, and then vacuum drying the precipitate may be a sample with both residual monomers and oligomers removed from the styrene-based copolymer.

Therefore, a small refractive index deviation as defined by Equation 1 above indicates that the content of polymeric substances or oligomers included in the styrene-based copolymer is low, or that the composition of the polymeric substances and oligomers included in the styrene-based copolymer is similar. Consequently, when a styrene-based copolymer with a refractive index deviation of 0.02 or less, as defined by Equation 1 above, is used, the transparency of the styrene-based copolymer itself and the transparency of the resin composition may be improved without any degradation of other properties.

According to an embodiment of the present invention, the refractive index deviation defined by Equation 1 above may be 0.02 or less, and, as specific examples, may be 0.018 or less, 0.016 or less, 0.014 or less, 0.012 or less, 0.01 or less, 0.008 or less, or 0.006 or less. When the refractive index deviation defined by Equation 1 above satisfies the above range, the transparency of the styrene-based copolymer itself and the transparency of the resin composition may be improved without any degradation of other properties.

According to an embodiment of the present invention, the alkyl (meth)acrylate-based monomer to form the alkyl (meth)acrylate-based monomer units included in the styrene-based copolymer may be one or more selected from (meth)acrylate, methyl (meth)acrylate, ethyl (meth)acrylate, and propyl (meth)acrylate, of which methyl methacrylate is preferred.

According to an embodiment of the present invention, the aromatic vinyl monomer to form the aromatic vinyl monomer units included in the styrene-based copolymer may be an alkyl-unsubstituted aromatic vinyl monomer, such as one or more selected from the group consisting of styrene, 4-fluorostyrene, 4-chlorostyrene, 2-chlorostyrene, 4-bromostyrene, and 2-bromostyrene, of which styrene is preferred.

According to an embodiment of the present invention, the maleimide monomer to form the maleimide monomer units included in the styrene-based copolymer may be one or more selected from the group consisting of N-methyl maleimide, N-ethyl maleimide, N-propyl maleimide, N-isopropyl maleimide, N-butyl maleimide, N-isobutyl maleimide, N-t-butyl maleimide, N-cyclohexyl maleimide, N-chlorophenyl maleimide, N-methylphenyl maleimide, N-bromophenyl maleimide, N-lauryl maleimide, N-hydroxyphenyl maleimide, N-methoxyphenyl maleimide, N-carboxyphenyl maleimide, N-nitrophenyl maleimide, N-phenyl maleimide, 2-methyl-N-phenyl maleimide, N-benzyl maleimide, N-naphthyl maleimide, and derivatives thereof, of which N-phenyl maleimide is preferred.

According to an embodiment of the present invention, the styrene-based copolymer may include alkyl (meth)acrylate-based monomer units in an amount of 75 wt% or more and 80 wt% or less, in a total weight % thereof. As a specific example, the styrene-based copolymer may include alkyl (meth)acrylate-based monomer units in an amount of 75.5 wt% or more, 76 wt% or more, 76.5 wt% or more, or 77 wt% or more, and may also include alkyl (meth)acrylate-based monomer units in an amount of 79.5 wt% or less, 79 wt% or less, 78.5 wt% or less, or 78 wt% or less. When the above range is satisfied, a uniform compositional distribution within a final polymer chain may be provided.

According to an embodiment of the present invention, the styrene-based copolymer may include aromatic vinyl monomer units in an amount of 10 wt% or more and 20 wt% or less, in a total weight % thereof. As a specific example, the styrene-based copolymer may include aromatic vinyl monomer units in an amount of 10.5 wt% or more, 11 wt% or more, 11.5 wt% or more, or 12 wt% or more, and may also include aromatic vinyl monomer units in an amount of 20.5 wt% or less, 21 wt% or less, 21.5 wt% or less, or 22 wt% or less. When the above range is satisfied, a uniform compositional distribution within a final polymer chain may be provided.

According to an embodiment of the present invention, the styrene-based copolymer may include maleimide monomer units in an amount of 5 wt% or more and 15 wt% or less, in a total weight % thereof. As a specific example, the styrene-based copolymer may include maleimide monomer units in an amount of 5.5 wt% or more, 6 wt% or more, 6.5 wt% or more, or 7 wt% or more, and may also include maleimide monomer units in an amount of 15.5 wt% or less, 16 wt% or less, 16.5 wt% or less, or 17 wt% or less. When the above range is satisfied, a uniform compositional distribution within a final polymer chain may be provided.

According to an embodiment of the present invention, the styrene-based copolymer may have a haze value of 1.1 % or less as measured according to ASTM D1003.

According to an embodiment of the present invention, the styrene-based copolymer may have a transmittance value of 91 % or more as measured according to ASTM D1003.

According to an embodiment of the present invention, the styrene-based copolymer may have a melt index of 10 g/10 min or more, as measured under conditions of 220 °C and 10 kg according to ASTM D1238.

Hereinafter, a method of manufacturing the styrene-based copolymer will be described.

### <Method of manufacturing styrene-based copolymer>

The present invention provides a method of manufacturing the styrene-based copolymer.

The method of manufacturing a styrene-based copolymer according to an embodiment of the present invention includes: introducing an alkyl (meth)acrylate-based monomer, an alkyl-unsubstituted aromatic vinyl monomer, a maleimide monomer, and an organic dispersant into a reactor to manufacture a mixture (S1); and suspension polymerizing the mixture at a temperature of 85 °C or more and 95 °C or less (S2).

In the method of manufacturing a styrene-based copolymer according to an embodiment of the present invention, step S1 may involve manufacturing a mixture in the reactor including 100 parts by weight of a monomer mixture that includes 75 to 80 wt% of (meth)acrylate monomers, 5 to 15 wt% of maleimide monomers, and 10 to 20 wt% of aromatic vinyl monomers, 100 to 200 parts by weight of a water-soluble solvent, and 0.03 to 2 parts by weight of an organic dispersant.

According to an embodiment of the present invention, the alkyl (meth)acrylate-based monomer may be one or more selected from (meth)acrylate, methyl (meth)acrylate, ethyl (meth)acrylate, and propyl (meth)acrylate, of which methyl methacrylate is preferred.

According to an embodiment of the present invention, the alkyl (meth)acrylate-based monomer may be introduced in an amount of 75 wt% or more and 80 wt% or less based on the total monomer introduced amount including the aromatic vinyl monomer, the maleimide monomer, and the alkyl (meth)acrylate-based monomer. As a specific example, the alkyl (meth)acrylate-based monomer may be introduced in an amount of 75.5 wt% or more, 76 wt% or more, 76.5 wt% or more, or 77 wt% or more, and also in an amount of 79.5 wt% or less, 79 wt% or less, 78.5 wt% or less, or 78 wt% or less. When the above range is satisfied, a uniform compositional distribution within a final polymer chain may be provided.

In addition, according to an embodiment of the present invention, the alkyl (meth)acrylate-based monomer may be batch-introduced prior to the initiation of polymerization in step S2.

According to an embodiment of the present invention, the aromatic vinyl monomer may be an alkyl-unsubstituted aromatic vinyl monomer, and one or more selected from the group consisting of styrene, 4-fluorostyrene, 4-chlorostyrene, 2-chlorostyrene, 4-bromostyrene, and 2-bromostyrene, of which styrene is preferred.

According to an embodiment of the present invention, the aromatic vinyl monomer may be introduced in an amount of 10 wt% or more and 20 wt% or less, based on the total monomer introduced amount including the aromatic vinyl monomer, the maleimide monomer, and the alkyl (meth)acrylate-based monomer. As a specific example, the aromatic vinyl monomer may be introduced in an amount of 10.5 wt% or more, 11 wt% or more, 11.5 wt% or more, or 12 wt% or more, and also in an amount of 20.5 wt% or less, 21 wt% or less, 21.5 wt% or less, or 22 wt% or less. When the above range is satisfied, a uniform compositional distribution within a final polymer chain may be provided.

If the aromatic vinyl monomer is an alkyl-substituted aromatic vinyl monomer, such as α-methyl styrene, depolymerization may occur at high temperatures of 200 °C or more in a resin composition comprising the aromatic vinyl monomer. As a result, the manufactured styrene-based copolymer may fail to satisfy an appropriate level of range of refractive index deviation as defined by Equation 1 above.

Furthermore, according to an embodiment of the present invention, the aromatic vinyl monomer may be batch-introduced prior to the initiation of polymerization in step S2.

According to an embodiment of the present invention, the maleimide monomer may be one or more selected from the group consisting of N-methyl maleimide, N-ethyl maleimide, N-propyl maleimide, N-isopropyl maleimide, N-butyl maleimide, N-isobutyl maleimide, N-t-butyl maleimide, N-cyclohexyl maleimide, N-chlorophenyl maleimide, N-methylphenyl maleimide, N-bromophenyl maleimide, N-lauryl maleimide, N-hydroxyphenyl maleimide, N-methoxyphenyl maleimide, N-carboxyphenyl maleimide, N-nitrophenyl maleimide, N-phenyl maleimide, 2-methyl-N-phenyl maleimide, N-benzyl maleimide, N-naphthyl maleimide, and derivatives thereof, of which N-phenyl maleimide is preferred.

According to an embodiment of the present invention, the maleimide monomer may be introduced in an amount of 5 wt% or more and 15 wt% or less, based on the total monomer introduced amount including the aromatic vinyl monomer, the maleimide monomer, and the alkyl (meth)acrylate-based monomer. As a specific example, the maleimide monomer may be introduced in an amount of 5.5 wt% or more, 6 wt% or more, 6.5 wt% or more, or 7 wt% or more, and also in an amount of 15.5 wt% or less, 16 wt% or less, 16.5 wt% or less, or 17 wt% or less. When the above range is satisfied, a uniform compositional distribution within a final polymer chain may be provided.

Furthermore, according to an embodiment of the present invention, the maleimide monomer may be batch-introduced prior to the initiation of polymerization in step S2.

According to an embodiment of the present invention, the water-soluble solvent may be ion-exchanged water or deionized water.

According to an embodiment of the present invention, the water-soluble solvent may correspond to an amount of 100 to 200 parts by weight, preferably 100 to 150 parts by weight, relative to 100 parts by weight of the monomer mixture. Within this range, the mixing of monomers becomes easier, and polymerization stability is improved, which has the effect of having a uniform composition with a high polymerization conversion rate.

According to an embodiment of the present invention, the organic dispersant may be free of metal elements. When a compound including metal elements is used as the organic dispersant, dispersion stability may decrease, normal reactions may not proceed due to poor dispersion stability.

According to an embodiment of the present invention, the organic dispersant may be one or more selected from the group consisting of water-soluble polyvinyl alcohol, partially saponified polyvinyl alcohol, polyacrylic acid, polyacrylic acid-acrylate, polyacrylate, a copolymer of vinyl acetate and maleic anhydride, hydroxypropyl methylcellulose, and gelatin.

The method of manufacturing a styrene-based copolymer according to an embodiment of the present invention may not use an inorganic dispersant such as phosphate metal salts (e.g., tricalcium phosphate) as a dispersant. If an inorganic dispersant rather than an organic dispersant is used, the inorganic dispersant may remain in the resin composition, and an acid treatment process to remove the residual inorganic dispersant may leave residual acid in the resin composition. As a result, the manufactured styrene-based copolymer may fail to satisfy an appropriate level of range of the refractive index deviation as defined by Equation 1 above.

According to an embodiment of the present invention, the dispersant may be used in an amount of 0.03 parts by weight to 2 parts by weight, 0.05 parts by weight to 1.5 parts by weight, or 0.07 parts by weight to 1.5 parts by weight, based on 100 parts by weight of the total introduced monomer. Within this range, the dispersion stability of the monomers in the polymerization system may be enhanced, enabling the manufacture of a copolymer with more uniform particles.

According to an embodiment of the present invention, in step S1, additional additives such as a polymerization initiator or a molecular weight regulator may be introduced.

According to an embodiment of the present invention, the polymerization initiator may be one or more selected from the group consisting of 2,5-dimethyl-2,5-di(t-butylperoxy)hexane, di(t-butylperoxy-isopropyl)benzene, t-butyl cumyl peroxide, di-(t-amyl)-peroxide, dicumyl peroxide, butyl 4,4-di(t-butylperoxy)valerate, t-butylperoxybenzoate, 2,2-di(t-butylperoxy)butane, t-amylperoxybenzoate, t-butylperoxyacetate, t-butylperoxy-(2-ethylhexyl)carbonate, t-butylperoxy isopropyl carbonate, t-butylperoxy-3,5,5-trimethylhexanoate, 1,1-bis(t-butylperoxy)cyclohexane, t-amylperoxyacetate, t-amylperoxy-(2-ethylhexyl)carbonate, 1,1-di(t-butylperoxy)-3,5,5-trimethylcyclohexane, 1,1-di(t-amylperoxy)cyclohexane, t-butyl monopermaleate, 1,1'-azobis(hexahydrobenzonitrile), azobisisobutyronitrile, and 1'-azobis(cyclohexane-1-cyclonitrile).

According to an embodiment of the present invention, the polymerization initiator may correspond to an amount of 0.01 parts by weight to 1 part by weight, 0.02 parts by weight to 0.8 parts by weight, or 0.05 parts by weight to 0.5 parts by weight, based on 100 parts by weight of the total introduced monomer. Within this range, excellent polymerization stability may be achieved.

According to an embodiment of the present invention, the molecular weight regulator may be one or more selected from the group consisting of t-dodecyl mercaptan, n-dodecyl mercaptan, octyl mercaptan, carbon tetrachloride, methylene chloride, methylene bromide, tetraethyl thiuram disulfide, dipentamethylene thiuram disulfide, and diisopropylxanthogen disulfide.

According to an embodiment of the present invention, the molecular weight regulator may be used in an amount of 0.01 parts by weight to 0.5 parts by weight, 0.1 parts by weight to 0.4 parts by weight, or 0.1 parts by weight to 0.3 parts by weight, based on 100 parts by weight of the total introduced monomer. Within this range, it is possible to manufacture a copolymer with an appropriate weight-average molecular weight.

According to an embodiment of the present invention, step S2 of the method of manufacturing a styrene-based copolymer may be conducted in a polymerization reactor equipped with a stirrer. Here, the stirrer may continuously apply a stirring force during the polymerization reaction. In this case, the stirring speed of the stirrer may be 100 RPM to 1,000 RPM, 300 RPM to 800 RPM, or 400 RPM to 600 RPM. Within this range, the dispersion stability of the monomers in the polymerization system may be enhanced, enabling the manufacture of a copolymer with more uniform particles.

According to an embodiment of the present invention, the polymerization in step S2 may be carried out at a temperature of 60 °C or more and 95 °C or less. As a specific example, the polymerization may be performed at a temperature of 62 ° or more, 64 °C or more, 66 °C or more, 68 °C or more, 70 °C or more, 72 °C or more, 74 °C or more, 76 °C or more, 78 °C or more, or 80 °C or more, and also at a temperature of 94 °C or less, 93 °C or less, 92 °C or less, or 91 °C or less. Within the aforementioned range, excellent polymerization stability may be achieved, and the refractive index deviation of the manufactured styrene-based copolymer may satisfy an appropriate level of range.

### <Resin composition>

The present invention provides a resin composition including the styrene-based copolymer.

According to an embodiment of the present invention, the resin composition includes: a graft copolymer including a conjugated diene-based polymer, aromatic vinyl monomer units, vinyl cyanide monomer units, and alkyl (meth)acrylate-based monomer units; and the aforementioned styrene-based copolymer.

According to an embodiment of the present invention, the resin composition may be a resin composition including a graft copolymer dispersed in the styrene-based copolymer, which is matrix resin. In this manner, by simultaneously including the graft copolymer and the styrene-based copolymer, excellent transparency of the resin composition may be achieved.

According to an embodiment of the present invention, the graft copolymer may include a conjugated diene-based polymer, alkyl (meth)acrylate-based monomer units, and aromatic vinyl monomer units.

According to an embodiment of the present invention, the conjugated diene-based polymer is a polymer including conjugated diene monomer units polymerized with conjugated diene monomers included and may be referred to as rubber.

According to an embodiment of the present invention, the conjugated diene monomer may be one or more selected from the group consisting of 1,3-butadiene, 2,3-dimethyl-1,3-butadiene, piperylene, 3-butyl-1,3-octadiene, isoprene, and 2-phenyl-1,3-butadiene, with a more specific example being 1,3-butadiene.

According to an embodiment of the present invention, the conjugated diene-based polymer may be a conjugated diene-based copolymer polymerized by including the conjugated diene monomer and further including monomers copolymerizable with the conjugated diene monomer. As a specific example, the conjugated diene-based polymer may be a butadiene polymer, a butadiene-styrene copolymer, or a butadiene-acrylonitrile copolymer.

According to an embodiment of the present invention, the conjugated diene-based polymer may be in the form of a conjugated diene-based polymer latex, which includes a conjugated diene-based polymer manufactured by emulsion polymerization, and may be introduced during the manufacture of the graft copolymer.

According to an embodiment of the present invention, the graft copolymer may include alkyl (meth)acrylate-based monomer units, maleimide monomer units, and aromatic vinyl monomer units graft-polymerized onto the conjugated diene-based polymer. Therefore, the graft copolymer may be a core-shell form of a graft copolymer, including a core that includes the conjugated diene-based polymer and a shell that includes alkyl (meth)acrylate-based monomer units, maleimide monomer units, and aromatic vinyl monomer units graft-polymerized onto the conjugated diene-based polymer.

According to an embodiment of the present invention, the alkyl (meth)acrylate-based monomer units provide transparency to the graft copolymer and improve compatibility with the styrene-based copolymer. The alkyl (meth)acrylate-based monomer to form the alkyl (meth)acrylate-based monomer units may be an alkyl (meth)acrylate-based monomer having 1 to 12 carbon atoms. As a specific example, the alkyl (meth)acrylate-based monomer may be one or more selected from the group consisting of methyl (meth)acrylate, ethyl (meth)acrylate, propyl (meth)acrylate, 2-ethylhexyl (meth)acrylate, decyl (meth)acrylate, and lauryl (meth)acrylate, with a more specific example being methyl (meth)acrylate. Here, "(meth)acrylate" refers to the inclusion of both methacrylate and acrylate.

According to an embodiment of the present invention, the aromatic vinyl monomer units are intended to enhance mechanical properties and improve compatibility with the styrene-based copolymer, and may be one or more selected from the group consisting of styrene, α-methylstyrene, α-ethylstyrene, and p-methylstyrene, with a specific example being styrene.

According to an embodiment of the present invention, the graft copolymer may further include vinyl cyanide monomer units graft-polymerized onto the conjugated diene-based polymer. The vinyl cyanide monomer units are intended to enhance mechanical properties and improve compatibility with the styrene-based copolymer, and may be one or more selected from the group consisting of acrylonitrile, methacrylonitrile, and ethacrylonitrile, with a specific example being acrylonitrile.

According to an embodiment of the present invention, the graft copolymer may adjust the content of the conjugated diene-based polymer and each monomer unit from the perspective of enhancing mechanical properties, heat resistance, transparency, and processability contributed by the graft copolymer. As a specific example, the graft copolymer may comprise 30 wt% to 70 wt% of the conjugated diene-based polymer, 20 wt% to 50 wt% of alkyl (meth)acrylate-based monomer units, 5 wt% to 20 wt% of aromatic vinyl monomer units, and 5 wt% to 10 wt% of vinyl cyanide monomer units.

According to an embodiment of the present invention, the graft copolymer may include 30 wt% to 70 wt% of the conjugated diene-based polymer. As a specific example, the graft copolymer may include 30 wt% or more, 35 wt% or more, 40 wt% or more, 45 wt% or more, or 50 wt% or more of the conjugated diene-based polymer, and may also include 70 wt% or less, 65 wt% or less, 60 wt% or less, 55 wt% or less, or 50 wt% or less. Within this range, the impact strength of the resin composition may be ensured, and graft polymerization may be performed smoothly, resulting in superior mechanical properties.

According to an embodiment of the present invention, the graft copolymer may include 20 wt% to 60 wt% of alkyl (meth)acrylate-based monomer units. As a specific example, the graft copolymer may include 20 wt% or more, 25 wt% or more, 30 wt% or more, or 35 wt% or more of alkyl (meth)acrylate-based monomer units, and may also include 60 wt% or less, 55 wt% or less, 50 wt% or less, 45 wt% or less, 40 wt% or less, or 35 wt% or less. Within this range, the resin composition exhibits excellent transparency, and the compatibility between the graft copolymer and the styrene-based copolymer is superior, resulting in outstanding mechanical properties.

According to an embodiment of the present invention, the graft copolymer may include 5 wt% to 20 wt% of aromatic vinyl monomer units. As a specific example, the graft copolymer may include 5 wt% or more, 6 wt% or more, 7 wt% or more, 8 wt% or more, 9 wt% or more, or 10 wt% or more of aromatic vinyl monomer units, and may also include 20 wt% or less, 19 wt% or less, 18 wt% or less, 17 wt% or less, 16 wt% or less, or 15 wt% or less. Within this range, the resin composition exhibits excellent transparency, and the compatibility between the graft copolymer and the styrene-based copolymer is superior, resulting in outstanding mechanical properties.

According to an embodiment of the present invention, the graft copolymer may include 1 wt% to 10 wt% of vinyl cyanide monomer units. As a specific example, the graft copolymer may include 1.2 wt% or more, 1.4 wt% or more, 1.6 wt% or more, 1.8 wt% or more, 2 wt% or more, or 3 wt% or more of vinyl cyanide monomer units, and may also include 10.0 wt% or less, 9.5 wt% or less, 8.0 wt% or less, 7.5 wt% or less, 7.0 wt% or less, 6.5 wt% or less, or 5 wt% or less. Within this range, the resin composition exhibits excellent transparency and color, minimizes coagulated material content due to reduced latex stability, and demonstrates superior compatibility between the graft copolymer and the styrene-based copolymer, resulting in outstanding mechanical properties.

According to an embodiment of the present invention, the resin composition may include the aforementioned styrene-based copolymer. Detailed descriptions of the styrene-based copolymer have been provided above, thus, the description thereof will be omitted hereinafter.

According to an embodiment of the present invention, the resin composition may include 10 wt% to 40 wt% of the graft copolymer and 60 wt% to 90 wt% of the styrene-based copolymer. As a specific example, the resin composition may include 10 wt% or more, 15 wt% or more, 20 wt% or more, 25 wt% or more, or 30 wt% or more of the graft copolymer, also include 40 wt% or less, 35 wt% or less, or 30 wt% or less of the graft copolymer, and may include the styrene-based copolymer in a residual amount relative to the components other than the graft copolymer.

### <Molded article>

The present invention provides a molded article formed from the resin composition.

According to an embodiment of the present invention, the molded article may be formed by extrusion or injection molding of the resin composition, and may be applied to product groups requiring transparent plastics, and may be, as specific examples, parts of transparent windows for washing machines, transparent windows for office equipment, and the like.

Hereinafter, exemplary embodiments of the present invention will be described in detail so that those with ordinary skill in the art to which the present invention pertains may easily carry out the exemplary embodiments. However, the present invention may be implemented in various different ways and is not limited to the embodiments described herein.

### Manufacturing Example 1

In the reactor, 100 parts by weight of ion-exchanged water, 10 parts by weight of N-phenylmaleimide, 77 parts by weight of methyl methacrylate, 13 parts by weight of styrene, 0.1 parts by weight of azobisisobutyronitrile as an initiator, 0.3 parts by weight of octyl mercaptan as a molecular weight regulator, and 0.07 parts by weight of a polymer of 2-acrylic acid and 2-ethyl-2-acrylate as an organic dispersant were introduced. The reactor RPM was fixed at 500. The reactor temperature was raised to 90 °C and maintained at 90 °C for 6 hours to complete the polymerization. Subsequently, the styrene-based copolymer was manufactured through washing, dehydration, and drying processes.

### Manufacturing Example 2

In the reactor, 100 parts by weight of ion-exchanged water, 8 parts by weight of N-phenylmaleimide, 77 parts by weight of methyl methacrylate, 15 parts by weight of styrene, 0.1 parts by weight of azobisisobutyronitrile as an initiator, 0.3 parts by weight of octyl mercaptan as a molecular weight regulator, and 0.07 parts by weight of a polymer of 2-acrylic acid and 2-ethyl-2-acrylate as an organic dispersant were introduced. The reactor RPM was fixed at 500. The reactor temperature was raised to 90 °C and maintained at 90 °C for 6 hours to complete the polymerization. Subsequently, the styrene-based copolymer was manufactured through washing, dehydration, and drying processes.

### Manufacturing Example 3

In the reactor, 100 parts by weight of ion-exchanged water, 6 parts by weight of N-phenylmaleimide, 76 parts by weight of methyl methacrylate, 18 parts by weight of styrene, 0.1 parts by weight of azobisisobutyronitrile as an initiator, 0.3 parts by weight of octyl mercaptan as a molecular weight regulator, and 0.07 parts by weight of a polymer of 2-acrylic acid and 2-ethyl-2-acrylate as an organic dispersant were introduced. The reactor RPM was fixed at 500. The reactor temperature was raised to 90 °C and maintained at 90 °C for 6 hours to complete the polymerization. Subsequently, the styrene-based copolymer was manufactured through washing, dehydration, and drying processes.

### Comparative Manufacturing Example 1

In 9 parts by weight of toluene as a reaction solvent, a monomer solution was prepared by mixing 10 parts by weight of N-phenylmaleimide, 77 parts by weight of methyl methacrylate, and 13 parts by weight of styrene. To this polymerization solution, 0.05 parts by weight of 1,1-bis(t-butylperoxy)cyclohexane and 0.2 parts by weight of tertiary dodecyl mercaptan were added. Subsequently, the prepared solution was introduced into a static mixer at the front of the reactor at a constant speed of 7 kg/hr, and 50 % of the polymer in the reactor was allowed to pass through the static mixer and be introduced into the reactor in a state of uniform mixing with the introduced monomer to perform bulk polymerization.

In this case, the polymerization was performed in the reactor at a temperature of 140 °C, followed by passing through 16-liter second and third reactors. Then, unreacted monomers and the reaction solvent were recovered and removed through a devolatilization bath at 260 °C under 15 torr, thereby manufacturing the styrene-based copolymer.

### Comparative Manufacturing Example 2

In 9 parts by weight of toluene as a reaction solvent, a monomer solution was prepared by mixing 8 parts by weight of N-phenylmaleimide, 77 parts by weight of methyl methacrylate, and 15 parts by weight of styrene. To this polymerization solution, 0.05 parts by weight of 1,1-bis(t-butylperoxy)cyclohexane and 0.2 parts by weight of tertiary dodecyl mercaptan were added. Subsequently, the prepared solution was introduced into a static mixer at the front of the reactor at a constant speed of 7 kg/hr, and 50 % of the polymer in the reactor was allowed to pass through the static mixer and be introduced into the reactor in a state of uniform mixing with the introduced monomer to perform bulk polymerization.

In this case, the polymerization was performed in the reactor at a temperature of 140 °C, followed by passing through 16-liter second and third reactors. Then, unreacted monomers and the reaction solvent were recovered and removed through a devolatilization bath at 260 °C under 15 torr, thereby manufacturing the styrene-based copolymer.

### Comparative Manufacturing Example 3

In 9 parts by weight of toluene as a reaction solvent, a monomer solution was prepared by mixing 6 parts by weight of N-phenylmaleimide, 76 parts by weight of methyl methacrylate, and 18 parts by weight of styrene. To this polymerization solution, 0.05 parts by weight of 1,1-bis(t-butylperoxy)cyclohexane and 0.2 parts by weight of tertiary dodecyl mercaptan were added. Subsequently, the prepared solution was introduced into a static mixer at the front of the reactor at a constant speed of 7 kg/hr, and 50 % of the polymer in the reactor was allowed to pass through the static mixer and be introduced into the reactor in a state of uniform mixing with the introduced monomer to perform bulk polymerization.

In this case, the polymerization was performed in the reactor at a temperature of 140 °C, followed by passing through 16-liter second and third reactors. Then, unreacted monomers and the reaction solvent were recovered and removed through a devolatilization bath at 260 °C under 15 torr, thereby manufacturing the styrene-based copolymer.

### Comparative Manufacturing Example 4

In Manufacturing Example 1, the styrene-based copolymer was manufactured in the same manner as in Manufacturing Example 1, except that 13 parts by weight of α-methyl styrene was introduced instead of 13 parts by weight of styrene.

### Comparative Manufacturing Example 5

In the reactor, 100 parts by weight of ion-exchanged water, 10 parts by weight of N-phenylmaleimide, 77 parts by weight of methyl methacrylate, 13 parts by weight of styrene, 0.1 parts by weight of azobisisobutyronitrile as an initiator, 0.3 parts by weight of octyl mercaptan as a molecular weight regulator, and 1.3 parts by weight of tricalcium phosphate (TCP) as an organic dispersant were introduced. The reactor RPM was fixed at 500. The reactor temperature was raised to 90 °C and maintained at 90 °C for 6 hours to complete the polymerization. After completing the polymerization, the pH was adjusted to 2.5 and stirred for 15 minutes. Subsequently, the product was subjected to washing, dehydration, and drying processes to manufacture the styrene-based copolymer.

### Comparative Manufacturing Example 6

The styrene-based copolymer was manufactured in the same manner as in Manufacturing Example 1, except that the reactor temperature was raised to 100 °C and maintained at 100 °C for 6 hours.

### Comparative Manufacturing Example 7

### <Manufacture of organic dispersant>

In a three-neck flask equipped with a condenser, 2700 g of water and 0.3 g of 2,2-azobis(2-amidinopropane)dihydrochloride were added. Under a nitrogen atmosphere, 180 g of the compound of Chemical Formula a (solid content: 62.1 wt%), 40 g of the compound of Chemical Formula b (solid content: 13.8 wt%), and 70 g of methyl methacrylate (solid content: 25 wt%) were added. The mixture was reacted at 60 °C for 6 hours to obtain a polymer aqueous solution with a solid content of 5 wt%. The weight-average molecular weight of the manufactured dispersant a was 2,000,000 g/mol.

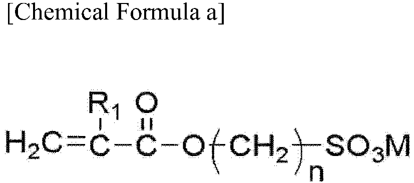

In Chemical Formula a, R₁ is methyl, n is 1, and M is sodium.

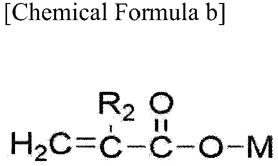

In Chemical Formula b, R₂ is methyl, and M is potassium.

### <Manufacture of styrene-based copolymer>

The styrene-based copolymer was manufactured in the same manner as in Manufacturing Example 1, except that dispersant a, manufactured as described above, was used as an organic dispersant instead of the polymer of 2-acrylic acid and 2-ethyl-2-acrylate.

### Experimental Example 1 - Measurement of first refractive index, second refractive index, and refractive index deviation

The first refractive index, second refractive index, and refractive index deviation of the styrene-based copolymers manufactured in Manufacturing Examples 1 to 3 and Comparative Manufacturing Examples 1 to 8 were measured using the methods described below and are shown in Tables 1 and 2.

* First Refractive Index: 4 g of each styrene-based copolymer manufactured in Manufacturing Examples 1 to 3 and Comparative Manufacturing Examples 1 to 8, was vacuum dried at 20 °C for 2 hours to obtain a sample. The first refractive index was then measured on the obtained sample using an Abbe refractometer at 25 °C, in accordance with ASTM D542.
* Second Refractive Index: 4 g of each styrene-based copolymer manufactured in Manufacturing Examples 1 to 3 and Comparative Manufacturing Examples 1 to 8, was dissolved in 40 ml of tetrahydrofuran (THF) solution and subjected to precipitation in 120 ml of methanol. The obtained precipitate was vacuum dried at 220 °C for 2 hours to obtain a sample. The second refractive index was then measured on the obtained sample using an Abbe refractometer at 25 °C, in accordance with ASTM D542.
* Refractive Index Deviation: The refractive index deviation between the first refractive index and the second refractive index was calculated using the formula defined in Equation 1 below.
$refractive index deviation = \frac{first refractive index - second refractive index}{first refractive index} \times 100$

### Experimental Example 2

Each styrene-based copolymer according to Manufacturing Examples 1 to 3 and Comparative Manufacturing Examples 1 to 8 was introduced into an extruder (28<p) under conditions of 230 °C, extruded into pellet form, and injection-molded under conditions of 240 °C to prepare specimens. The physical properties were measured using the methods described below and are described in Tables 1 and 2.

* Glass Transition Temperature (Tg): For 10 mg of a pellet of each styrene-based copolymer manufactured in Manufacturing Examples 1 to 3 and Comparative Manufacturing Examples 1 to 8, the glass transition temperature were measured using a differential scanning calorimeter (DSC) Q20 from TA Instruments, under the conditions of a heating rate of 10 °C/min and a nitrogen flow rate of 50 cc/min.
* Transparency: A specimen with dimensions of 80 mm × 40 mm and a thickness of 3.0 mm of each styrene-based copolymer manufactured in Manufacturing Examples 1 to 3 and Comparative Manufacturing Examples 1 to 8, were stored under conditions of 25 °C and 50±5% relative humidity for 12 hours. The total light transmittance (Tt, %) and haze (Hz, %) were then measured according to ASTM D1003 using the HZ-V3 from SUG Corporation.
* Melt Index (MI, g/10 min): For a pallet of each styrene-based copolymer manufactured in Manufacturing Examples 1 to 3 and Comparative Manufacturing Examples 1 to 8, the melt index was measured under conditions of 220 °C and 10 kg in accordance with ASTM D1238.

**[Table 1]**

| | Manufacturing Example | | |
|---|---|---|---|
| | 1 | 2 | 3 |
| First refractive index | 1.5148 | 1.5151 | 1.5150 |
| Second refractive index | 1.5147 | 1.5150 | 1.5149 |
| Refractive index deviation | 0.0066 | 0.0066 | 0.0066 |
| Tg (°C) | 119 | 117 | 114 |
| Hz (%) | 0.6 | 0.6 | 0.6 |
| Tt (%) | 91.8 | 91.5 | 91.4 |
| MI (g/10min) | 10 | 11 | 12 |

**[Table 2]**

| | Comparative Manufacturing Example | | | | | | |
|---|---|---|---|---|---|---|---|
| | 1 | 2 | 3 | 4 | 5 | 6 | 7 |
| First refractive index | 1.5157 | 1.5158 | 1.5158 | 1.5159 | 1.5157 | 1.5157 | - |
| Second refractive index | 1.5149 | 1.5149 | 1.5149 | 1.5150 | 1.5151 | 1.5148 | - |
| Refractive index deviation | 0.0528 | 0.0594 | 0.0594 | 0.0594 | 0.0396 | 0.0594 | - |
| Tg (°C) | 119 | 117 | 114 | 120 | 118 | 117 | - |
| Hz (%) | 1.3 | 1.3 | 1.2 | 1.2 | 1.1 | 1.2 | - |
| Tt (%) | 89.9 | 89.5 | 89.6 | 89.8 | 90 | 89.8 | - |
| MI (g/10min) | 6 | 7 | 8 | 9 | 10 | 7 | - |

With reference to Tables 1 and 2, it was confirmed that in Manufacturing Examples 1 to 3, which were suspension-polymerized at an appropriate range of polymerization temperature in the presence of an organic dispersant free of metal elements and without introducing alkyl-substituted aromatic vinyl monomers, the refractive index deviation was 0.02 or less.

In contrast, in Comparative Manufacturing Examples 1 to 3, which were not carried out through suspension polymerization, it was confirmed that the refractive index deviation exceeded 0.02.

Additionally, it was confirmed that in Comparative Manufacturing Example 4, where alkyl-substituted aromatic vinyl monomers were introduced while proceeding with suspension polymerization, Comparative Manufacturing Example 5, where an inorganic dispersant was used, and Comparative Manufacturing Example 6, which exceeded the preferred reaction temperature, the refractive index deviation exceeded 0.02.

In contrast, in Comparative Manufacturing Example 7, where an organic dispersant including metal elements was used, a normal polymerization reaction did not occur.

### Manufacturing Example 4 - Manufacture of graft copolymer

50 parts by weight (based on solid content) of butadiene rubber latex with an average particle size of 3,000 Å, 100 parts by weight of ion-exchanged water, 1.0 parts by weight of sodium oleate (based on solid content), 35 parts by weight of methyl methacrylate, 12 parts by weight of styrene, 3 parts by weight of acrylonitrile, 0.5 parts by weight of tertiary dodecyl mercaptan, 0.048 parts by weight of sodium formaldehyde sulfoxylate, 0.012 parts by weight of sodium ethylenediaminetetraacetate, 0.001 parts by weight of ferrous sulfate, and 0.04 parts by weight of cumene hydroperoxide were introduced and reacted at 65 °C for 3 hours. Subsequently, the temperature was raised to 70 °C and the mixture was aged for 1 hour. The reaction was then terminated to manufacture a graft copolymer latex. The manufactured graft copolymer latex was coagulated using an acetic acid aqueous solution, then washed and dried to manufacture a graft copolymer powder.

### Examples and Comparative Examples

30 parts by weight of the graft copolymer according to Manufacturing Example 4, 0.3 parts by weight of a lubricant (EBA), and 0.2 parts by weight of a heat stabilizer (manufactured by BASF, product name IR0176) were mixed into 70 parts by weight of each styrene-based copolymer according to Manufacturing Examples 1 to 3 and Comparative Manufacturing Examples 1 to 6, to manufacture the resin compositions according to Examples 1 to 3 and Comparative Examples 1 to 6, respectively.

### Experimental Example 3

Each resin composition according to Examples 1 to 3 and Comparative Examples 1 to 6 was introduced into an extruder (28φ) under conditions of 230 °C extruded into pellet form, and injection-molded under conditions of 240 °C to prepare specimens. The physical properties measured using the methods described below are described in Table 3.

* Transparency: A specimen with dimensions of 80 mm × 40 mm and a thickness of 3.0 mm of each resin composition manufactured in Examples and Comparative Examples, were stored under conditions of 25 °C and 50±5% relative humidity for 12 hours. The total light transmittance (Tt, %) and haze (Hz, %) were then measured according to ASTM D1003 using the HZ-V3 from SUG Corporation.
* Melt Index (MI, g/10 min): For a pallet of each resin composition manufactured in Examples and Comparative Examples, the melt index was measured under conditions of 220 °C and 10 kg in accordance with ASTM D1238.
* Softening Temperature (VST, °C): For a specimen of each resin composition manufactured in Examples and Comparative Examples, the softening temperature was measured under unannealed conditions in accordance with ASTM D1525.
* Heat Deflection Temperature (HDT, °C): For a specimen of each resin composition manufactured in Examples and Comparative Examples, the heat deflection temperature was measured under unannealed conditions in accordance with ASTM D648.

**[Table 3]**

| | Example | | | Comparative Example | | | | | |
|---|---|---|---|---|---|---|---|---|---|
| | 1 | 2 | 3 | 1 | 2 | 3 | 4 | 5 | 6 |
| Hz (%) | 3.3 | 2.7 | 2.6 | 5.7 | 5.0 | 4.5 | 4.8 | 4.8 | 4.7 |
| Tt (%) | 91.7 | 91.7 | 91.5 | 88.5 | 88.2 | 88.4 | 88.4 | 89.0 | 88.9 |
| MI (g/10min) | 5 | 6 | 6 | 4 | 5 | 5 | 5 | 5 | 6 |
| VST (°C) | 107 | 106 | 105 | 107 | 107 | 105 | 107 | 107 | 106 |
| HDT (°C) | 94 | 94 | 93 | 94 | 93 | 93 | 94 | 94 | 93 |

With reference to Table 3, it was confirmed that for the resin compositions of Examples 1 to 3, which use styrene-based polymers with a refractive index deviation of 0.02 or less, superior transparency is ensured compared to the resin compositions of Comparative Examples 1 to 6.

## Claims

1. A styrene-based copolymer comprising alkyl (meth)acrylate-based monomer units, aromatic vinyl monomer units, and maleimide monomer units, and having a refractive index deviation of 0.02 or less as defined by Equation 1 below: $\begin{matrix}refractive index deviation \\ = \frac{first refractive index - second refractive index}{first refractive index} \times 100\end{matrix}$ In Equation 1 above, a first refractive index refers to a refractive index measured after vacuum drying the styrene-based copolymer, and a second refractive index refers to a refractive index of a precipitate obtained by dissolving the styrene-based copolymer in a tetrahydrofuran (THF) solution and then by precipitation with methanol.

2. The styrene-based copolymer of claim 1, wherein the refractive index deviation is 0.01 or less.

3. The styrene-based copolymer of claim 1, wherein the alkyl (meth)acrylate-based monomer units are included in an amount of 75 wt% or more, and 80 wt% or less.

4. The styrene-based copolymer of claim 3, wherein the aromatic vinyl monomer units are included in an amount of 10 wt% or more, and 20 wt% or less, and the maleimide monomer units are included in an amount of 5 wt% or more, and 15 wt% or less.

5. The styrene-based copolymer of claim 1, wherein a haze value measured in accordance with ASTM D1003 is 1.1 % or less.

6. The styrene-based copolymer of claim 1, wherein a transmittance value measured in accordance with ASTM D1003 is 91 % or more.

7. The styrene-based copolymer of claim 1, wherein a melt index measured under conditions of 220 °C and 10 kg in accordance with ASTM D1238 is 10 g/10 min or more.

8. A method of manufacturing a styrene-based copolymer, comprising: introducing an alkyl (meth)acrylate-based monomer, an alkyl-unsubstituted aromatic vinyl monomer, a maleimide monomer, and an organic dispersant into a reactor to manufacture a mixture (S1); and suspension polymerizing the mixture at a temperature of 60 °C or more and 95 °C or less (S2).

9. The method of claim 8, wherein in step S1, an alkyl-substituted aromatic vinyl monomer is not introduced.

10. The method of claim 8, wherein the organic dispersant does not include a metal element.

11. The method of claim 8, wherein the organic dispersant is one or more selected from the group consisting of water-soluble polyvinyl alcohol, partially saponified polyvinyl alcohol, polyacrylic acid, polyacrylic acid-acrylate, polyacrylate, a copolymer of vinyl acetate and maleic anhydride, hydroxypropyl methylcellulose, and gelatin.

12. A resin composition, comprising: a graft copolymer including a conjugated diene-based polymer, aromatic vinyl monomer units, vinyl cyanide monomer units, and alkyl (meth)acrylate-based monomer units; and the styrene-based copolymer according to claim 1.
